# FASCICULE DE BREVET EUROPEEN

(11) **EP 1 365 949 B1**
(45) Date de publication et mention de la délivrance du brevet: **20.08.2008**
(21) Numéro de dépôt: 02706887.3
(22) Date de dépôt: 22.02.2002
(51) Int. Cl.: B60T 13/573

(54) **DISPOSITIF DE FREINAGE POUR VEHICULE AUTOMOBILE.**
KRAFTFAHRZEUGBREMSVORRICHTUNG
BRAKING DEVICE FOR MOTOR VEHICLE

(30) Priorité: 28.02.2001 FR 0102772
(43) Date de publication de la demande: 03.12.2003
(73) Titulaire: ROBERT BOSCH GMBH, 70442 Stuttgart (DE)
(72) Inventeur: ATTARD, Jean-Marc, F-60500 CHANTILLY (FR); AUGUSTE, Antony, F-94350 VILLIERS SUR MARNE (FR)
(74) Mandataire: Hurwic, Aleksander Wiktor
(86) Numéro de dépôt international: PCT/FR2002/000659
(87) Numéro de publication internationale: WO 2002/068252

(56) Documents cités:
- FR-A- 2 774 345
- US-A- 6 085 522

## Description

La présente invention concerne un dispositif de freinage pour véhicule automobile, du type comprenant un servomoteur d'assistance pneumatique associé à un maître-cylindre dont un piston primaire est déplaçable en translation, pour générer un effort de freinage, par un piston du servomoteur et par une tige de commande reliée à une pédale de frein.

Pour faciliter et améliorer les freinages d'urgence, on a déjà proposé d'utiliser un piston primaire de forme cylindrique tubulaire, dans lequel sont logés :
- un piston de réaction, lui-même de forme cylindrique tubulaire, qui est muni d'un ressort de rappel et qui est destiné à coopérer à son extrémité arrière avec l'extrémité avant de la tige de commande reliée à la pédale de frein,
- une tige de commande de rapport d'assistance montée coulissante dans le piston de réaction et qui a une extrémité arrière destinée à coopérer avec l'extrémité avant de la tige de commande reliée à la pédale de frein et une extrémité avant portant un clapet,
- et un piston rapide monté coulissant dans la partie avant du piston primaire et comportant un passage communiquant avec une chambre primaire du maître-cylindre, l'extrémité arrière de ce passage étant destinée à être sélectivement obturée par le clapet précité pour isoler le piston de réaction de la pression régnant dans la chambre primaire du maître-cylindre ou ouverte pour faire agir cette pression sur le piston de réaction.

Le document FR 2 774 345 décrit un maître - cylindre à réaction hydraulique dynamiquement annulable conventionnel, pour un servomoteur d'assistance au freinage.

De façon connue, lorsqu'un effort est appliqué à la pédale de frein pour un freinage normal, la tige de commande reliée à la pédale n'est pas déplacée plus vite que le piston du servomoteur quand ce dernier est alimenté en air à la pression atmosphérique, et le piston primaire est déplacé vers l'avant par le servomoteur d'assistance sans que la tige de commande reliée à la pédale agisse sur la tige de commande de rapport d'assistance pour fermer le passage du piston rapide qui communique avec la chambre primaire du maître-cylindre. Dans ces conditions, la pression générée dans la chambre primaire par l'effort de freinage agit sur le piston de réaction qui transmet un retour d'effort à la pédale de frein par l'intermédiaire de la tige de commande reliée à cette pédale, ce qui permet au conducteur de moduler l'effort qu'il applique à la pédale de frein.

Lors d'un freinage d'urgence, la tige de commande reliée à la pédale est déplacée vers l'avant plus vite que le piston du servomoteur et agit sur la tige de commande de rapport d'assistance pour obturer le passage dans le piston rapide qui communique avec la chambre primaire du maître-cylindre. Dans ces conditions, le piston de réaction est isolé de la chambre primaire et la pression qui règne dans cette chambre agit uniquement sur le clapet monté à l'extrémité avant de la tige de commande de rapport d'assistance. La force exercée alors sur cette tige de commande est transmise comme retour d'effort à la pédale de frein et a une amplitude inférieure à celle du retour d'effort dans un freinage normal parce que la section du clapet sur laquelle agit la pression de la chambre primaire est nettement inférieure à la section de l'extrémité avant du piston de réaction soumise à cette pression lors d'un freinage normal.

Le retour d'effort à la pédale, qui est plus faible lors du freinage d'urgence, incite le conducteur à maintenir plus longtemps l'effort qu'il applique à la pédale, ce qui améliore l'efficacité du freinage d'urgence.

Lorsque le conducteur, après un freinage d'urgence, relâche au moins partiellement l'effort appliqué à la pédale, la pression dans la chambre primaire du maître-cylindre repousse vers l'arrière le piston primaire et les pièces qui lui sont liées, qui suivent le mouvement de recul de la pédale de frein et de la tige de commande reliée à la pédale. Lorsque les pièces ont suffisamment reculé, le passage formé dans le piston rapide, jusque-là obturé par le clapet, est ouvert et la pression de la chambre primaire du maître-cylindre est appliquée sur l'extrémité avant du piston de réaction qui recule davantage vers l'arrière en comprimant son ressort de rappel.

Si alors il faut de nouveau effectuer un freinage d'urgence, l'effort appliqué par le conducteur à la pédale est transmis au piston de réaction et est contrarié par la force résultant de l'application de la pression de la chambre primaire du maître-cylindre sur l'extrémité avant du piston de réaction, ce qui peut amener le conducteur à ressentir tout de suite ou très rapidement une impression de freinage maximal et à relâcher prématurément l'effort qu'il exerce sur la pédale de frein, au détriment de l'efficacité du freinage.

L'invention a notamment pour but d'éviter cet inconvénient, de façon simple, efficace et peu coûteuse.

Elle propose à cet effet un dispositif de freinage pour véhicule automobile, comprenant un. servomoteur d'assistance pneumatique associé à un maître-cylindre dont un piston primaire est déplaçable en translation, pour générer un effort de freinage, par un piston du servomoteur et par une tige de commande reliée à une pédale de frein, ledit piston primaire étant de forme générale cylindrique tubulaire et contenant un piston de réaction de forme cylindrique tubulaire, muni d'un ressort de rappel et destiné à coopérer à son extrémité arrière avec une extrémité avant de la tige de commande, une tige de commande de rapport d'assistance montée coulissante dans le piston de réaction et ayant une extrémité arrière destinée à coopérer avec l'extrémité avant de la tige de commande reliée à la pédale de frein, et une extrémité avant comportant un clapet de fermeture d'un passage formé dans un piston rapide monté dans la partie avant du piston primaire, ce passage communiquant avec une chambre primaire du maître-cylindre pour faire agir la pression régnant dans la chambre primaire sur l'extrémité avant du piston de réaction quand ledit passage n'est pas obturé par le clapet, caractérisé en ce qu'il comprend des moyens limitant le déplacement de la tige de commande de rapport d'assistance vers l'arrière et permettant, après un freinage d'urgence et un relâchement partiel de l'effort de freinage, de maintenir ledit clapet en position de fermeture dudit passage sensiblement jusqu'à un relâchement complet de l'effort de freinage.

Par la limitation du déplacement de la tige de commande de rapport d'assistance vers l'arrière, on maintient le clapet monté à l'extrémité avant de cette tige en position de fermeture du passage communiquant avec la chambre primaire du maître-cylindre et on isole le piston de réaction de cette pression sensiblement jusqu'à ce que le conducteur ait complètement relâché l'effort qu'il applique à la pédale de frein. S'il faut, avant ce relâchement complet, effectuer à nouveau un freinage d'urgence, l'effort appliqué à la pédale de frein par le conducteur est transmis au piston primaire par la tige de commande reliée à la pédale et le retour d'effort à la pédale est déterminé par la pression dans la chambre primaire du maître-cylindre appliquée à la partie du clapet qui obture l'extrémité arrière du passage formé dans le piston rapide. On est ainsi ramené dans les conditions précédemment décrites de freinage d'urgence, dans lesquelles le conducteur n'est pas incité à relâcher prématurément l'effort qu'il applique à la pédale de frein.

Selon une autre caractéristique de l'invention, les moyens limitant le déplacement de la tige de commande de rapport d'assistance vers l'arrière sont des moyens de butée portés par le piston primaire et destinés à coopérer avec une partie de la tige de commande de rapport d'assistance.

Ces moyens de butée sont situés entre l'extrémité avant du piston de réaction dans sa position de repos et une partie avant de la tige de commande de rapport d'assistance, cette partie avant formant logement dudit clapet et ayant un diamètre extérieur inférieur au diamètre interne du piston primaire.

Dans une forme préférée de réalisation de l'invention, les moyens de butée sont rapportés sur la surface interne du piston primaire et sont fixés par exemple par emboîtement, par collage ou par vissage.

En particulier, ces moyens de butée sont formés par un anneau élastique fendu engagé dans une gorge annulaire interne du piston primaire.

En variante, les moyens de butée peuvent être formés par un épaulement de la surface interne du piston primaire.

Un ressort de rappel est monté entre l'extrémité avant de la tige de commande de rapport d'assistance et l'extrémité arrière du piston rapide, pour écarter le piston rapide et ouvrir le passage précité quand la force exercée sur le piston rapide par la pression dans la chambre primaire du maître-cylindre devient inférieure à la force exercée sur le piston rapide par ce ressort de rappel.

On peut ainsi, en choisissant la raideur du ressort de rappel, déterminer la pression dans la chambre primaire du maître-cylindre pour laquelle le passage formé dans le piston rapide sera ouvert.

Avantageusement, la force exercée par ce ressort de rappel sur le piston rapide est inférieure à la force exercée sur le piston de réaction par son ressort de rappel.

Ainsi, le passage formé dans le piston rapide ne peut être ouvert que lorsque le piston de réaction a été ramené dans sa position de repos par son ressort de rappel.

Dans cette position, l'extrémité arrière de la tige de commande de rapport d'assistance est en saillie vers l'extérieur par rapport à l'extrémité arrière du piston de réaction, mais reste écartée de l'extrémité avant de la tige de commande reliée à la pédale de frein, dans la position de repos de la pédale de frein, en raison de la limitation du déplacement vers l'arrière de la tige de commande de rapport d'assistance.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'une partie d'un dispositif de freinage selon l'invention, représentant les pièces de ce dispositif dans leur position de repos ;
- les figures 2 et 3 sont des vues semblables à la figure 1 et représentent respectivement les pièces dans une position de freinage d'urgence et dans une position de relâchement partiel de l'effort à la pédale après un freinage d'urgence.

Par convention, dans toute la description, l'avant correspond à ce qui est à gauche dans les dessins et l'arrière à ce qui est à droite.

La référence 10 désigne le piston d'un servomoteur d'assistance pneumatique qui, d'une façon bien connue de l'homme du métier, comporte une enveloppe partagée de façon étanche par une cloison mobile solidaire du piston 10 en une chambre avant reliée à une source de dépression, telle par exemple que la dépression moteur, et une chambre arrière qui peut être sélectivement reliée à la pression atmosphérique ou à la dépression par un clapet à trois voies commandé par la pédale de frein.

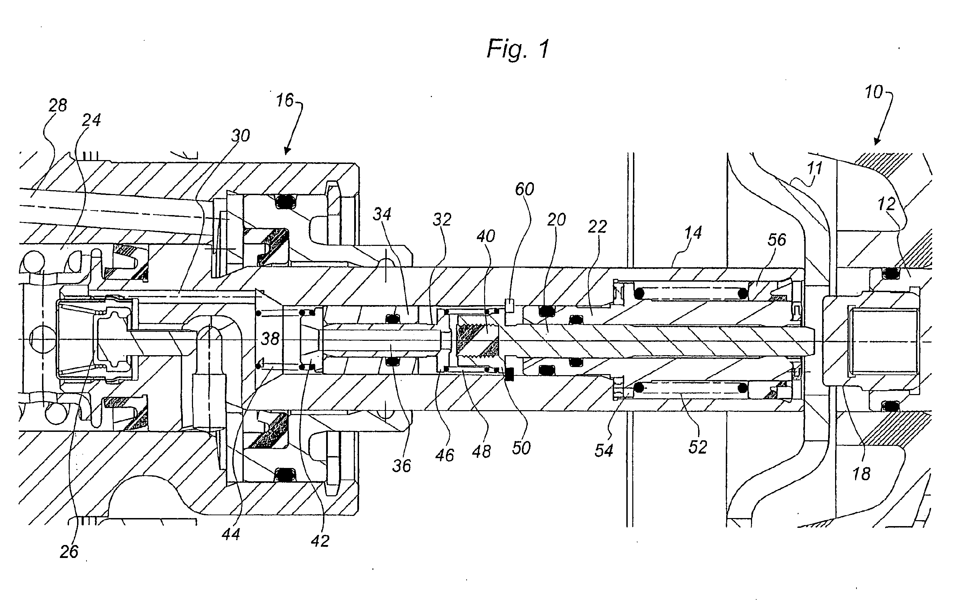

La pédale de frein est reliée par une tige de commande 12 dont l'extrémité avant est représentée en figure 1, au piston 10 du servomoteur et à un piston primaire 14 d'un maître-cylindre 16 d'un circuit de freinage. Une pièce 11 de renfort solidaire du piston 10 du servomoteur est en appui sur l'extrémité arrière du piston primaire 14. Un palpeur 18 est monté axialement à l'extrémité avant de la tige de commande 12 et est destiné à agir sur l'extrémité arrière d'une tige 20 de commande de rapport d'assistance, qui est montée axialement coulissante à l'intérieur d'un piston de réaction 22, lui-même monté axialement coulissant à l'intérieur de la partie arrière du piston primaire 14.

De façon connue, le piston primaire 14 est monté axialement coulissant à l'extrémité arrière du maître-cylindre 16 et son extrémité avant, logée dans une chambre primaire 24 du maître-cylindre, porte un clapet 26 d'obturation d'un passage communiquant avec un canal 28 d'alimentation en liquide de freinage, pour isoler la chambre primaire 24 du réservoir de liquide de freinage dès le début du freinage.

Un canal 30 est formé axialement à l'extrémité avant du piston primaire 14 pour établir une communication entre la chambre primaire 24 du maître-cylindre et le volume interne du piston primaire 14. Dans ce volume interne, délimité par une surface interne cylindrique du piston primaire 14, sont logés successivement, de l'arrière vers l'avant : le piston de réaction 22, la tige 20 de commande de rapport d'assistance, qui traverse axialement le piston de réaction 22, et un piston rapide 32 monté axialement coulissant de façon étanche dans une douille 34 solidaire du piston primaire 14. Le piston rapide 32 est formé avec un passage axial 36 dont l'extrémité avant débouche dans une chambre interne 38 du piston primaire 14, reliée par le canal 30 à la chambre primaire 24 du maître-cylindre 16. L'extrémité arrière du passage 36 est obturable par un clapet 40 porté par l'extrémité avant de la tige 20 de commande de rapport d'assistance.

L'extrémité avant du piston rapide 32 est, dans la position de repos représentée en figure 1, en butée sur une pièce annulaire 42 formant siège d'un ressort de rappel 44 dont l'extrémité arrière est en appui sur la pièce 42 et l'extrémité avant en appui sur une partie du piston primaire 14. Dans la position de repos de la figure 1, la pièce annulaire 42 est poussée par le ressort 44 en appui sur l'extrémité avant de la douille 34.

L'extrémité arrière du piston rapide 32, qui est axialement écartée de l'extrémité arrière de la douille 34 dans la position du repos, comporte une bride annulaire 46 formant siège d'un ressort de rappel 48 monté entre l'extrémité arrière du piston rapide 32 et l'extrémité avant de la tige 20 de commande de rapport d'assistance, l'extrémité arrière du ressort de rappel 48 venant s'appliquer sur une bride annulaire 50 de l'extrémité avant de la tige 20. Cette bride annulaire 50 et la partie avant de la tige 20 ont un diamètre ou une dimension transversale extérieure inférieur au diamètre interne du piston primaire 14 et supérieur au diamètre de la surface interne cylindrique du piston de réaction 22, dans laquelle la tige 20 est montée coulissante à étanchéité.

L'extrémité avant du piston de réaction 22 est guidée à coulissement étanche dans la surface cylindrique interne du piston primaire 14 et le diamètre ou la dimension transversale de la face d'extrémité avant du piston de réaction 22, est sensiblement égal au diamètre ou à la dimension transversale de la surface cylindrique interne du piston primaire 14.

Un ressort 52 de rappel du piston de réaction 22 dans sa position de repos représentée en figure 1, est monté autour de la partie arrière de ce piston, entre un rebord annulaire externe 54 formé dans la partie médiane du piston 22 et une bague de guidage 56 montée par encliquetage à l'extrémité arrière du piston primaire 14 et traversée par la partie arrière du piston de réaction 22.

La longueur axiale de la tige 20 de commande de rapport d'assistance est telle que, dans la position de repos représentée en figure 1, son extrémité arrière est en saillie axiale vers l'arrière par rapport à l'extrémité arrière du piston de réaction 22, et le clapet 40 monté à l'extrémité avant de la tige 20 est axialement écarté de l'extrémité arrière du passage 36 formé dans le piston rapide 32.

Dans des conditions de freinage normal, le conducteur applique sur la pédale de frein un effort qui est transmis à la tige de commande 12 pour déplacer cette tige axialement vers l'avant. Ce déplacement se traduit par une alimentation de la chambre arrière du servomoteur en air à la pression atmosphérique et donc par un déplacement du piston 10 de ce servomoteur axialement vers l'avant. Le déplacement axial vers l'avant du piston 10 entraîne axialement vers l'avant le piston primaire 14, ce qui a pour effet d'isoler la chambre primaire 24 du maître-cylindre 16 du réservoir de liquide de freinage et d'augmenter la pression dans cette chambre primaire et donc dans le circuit de freinage, après rattrapage des jeux et des courses mortes. Lors d'un freinage normal, la tige de commande 12 n'est pas déplacée axialement vers l'avant plus rapidement que le piston 10 du servomoteur et n'agit pas sur la tige 20 de la commande de rapport d'assistance pour obturer l'extrémité arrière du passage 36 formé dans le piston rapide.

Le passage 36 restant ouvert, la pression régnant dans la chambre primaire 24 du maître-cylindre agit sur l'extrémité avant du piston de réaction 22 dont l'extrémité arrière s'applique sur l'extrémité avant du palpeur 18 pour transmettre un retour d'effort à la pédale de frein, ce qui permet au conducteur de moduler l'effort qu'il applique à la pédale de frein comme il le souhaite.

Lorsque le conducteur relâche l'effort qu'il exerce sur la pédale de frein, la chambre arrière du servomoteur est reliée à la dépression et le piston primaire 14 est ramené dans la position de repos de la figure 1, le piston de réaction 22 étant lui-même ramené dans la position représentée par son ressort de rappel 52.

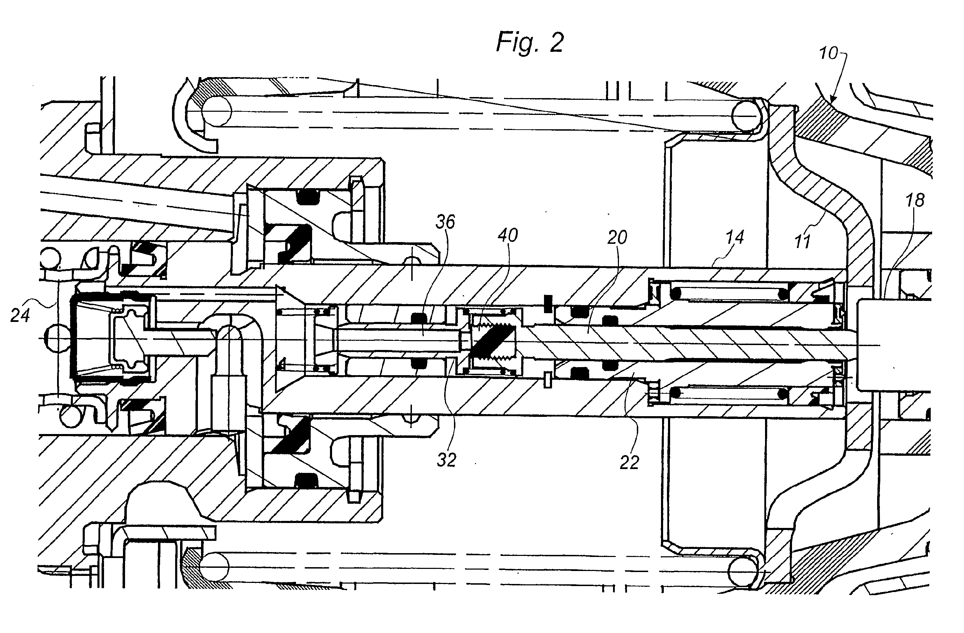

Lors d'un freinage d'urgence (figure 2), la tige de commande 12 est déplacée très rapidement vers l'avant sur la totalité de sa course, plus rapidement que le piston 10 du servomoteur et le palpeur 18 déplace vers l'avant la tige 20 dont le clapet 40 obture l'extrémité arrière du passage 36 formé dans le piston rapide 32. Ensuite, le piston primaire 14 est déplacé axialement vers l'avant, à la fois par le piston du servomoteur et par le palpeur 18 monté à l'extrémité avant de la tige de commande 12, pour augmenter la pression dans la chambre primaire 24 et dans le circuit de freinage.

La pression régnant dans la chambre primaire 24 est appliquée sur la partie de l'extrémité avant du clapet 40 qui obture l'extrémité arrière du passage 36 et ne peut agir sur l'extrémité avant du piston de réaction 22. La force résultant de l'application de la pression régnant dans la chambre primaire 24 sur le clapet 40 est transmise par la tige 20 et la palpeur 18 à la tige de commande 12 et à la pédale de frein, mais son amplitude est nettement inférieure au retour d'effort qui est transmis à la pédale de frein par le piston de réaction 22 lors d'un freinage normal, la surface de la partie du clapet 40 sur laquelle agit la pression lors d'un freinage d'urgence étant nettement inférieure à la surface de l'extrémité avant du piston de réaction 22.

Ce retour d'effort plus faible incite le conducteur à maintenir l'effort qu'il exerce sur la pédale de frein, ce qui garantit une efficacité maximale du freinage.

Lorsqu'après un freinage d'urgence, le conducteur relâche l'effort qu'il a exercé sur la pédale de frein, la tige de commande 12 est déplacée axialement vers l'arrière, la chambre arrière du servomoteur est isolée de la pression atmosphérique et reliée à la dépression moteur, et le piston 10 du servomoteur et le piston primaire 14 sont déplacés axialement vers leurs positions de repos représentées en figure 1. Au cours de ce déplacement, l'extrémité arrière du passage 36 formé dans le piston rapide 32 reste tout d'abord obturée par le clapet 40, puis, comme la tige 20 soumise à la pression régnant dans la chambre primaire 24 suit le mouvement de retour vers l'arrière de la tige de commande 12, le clapet 40 s'écarte de l'extrémité arrière du piston rapide 32 et la pression régnant dans la chambre primaire 24 peut alors agir sur l'extrémité avant du piston de réaction 22.

Si, dans ces conditions, il faut à nouveau effectuer un freinage d'urgence avant que les pièces soient complètement revenues dans leur position de repos représentée en figure 1, l'effort exercé sur la pédale de frein par le conducteur est contrarié par la force résultant de l'application de la pression régnant encore dans la chambre primaire 24 sur l'extrémité avant du piston de réaction 22.

Pour éviter cet inconvénient, l'invention propose de limiter le déplacement vers l'arrière de la tige 20 de commande de rapport d'assistance grâce à des moyens 60 qui sont solidaires du piston primaire 14 et qui s'étendent radialement dans le volume interne de ce piston, en arrière de la bride annulaire 50 formée à l'extrémité avant de la tige 20, ces moyens 60 se trouvant un peu en avant de l'extrémité avant du piston de réaction 22 dans sa position de repos représentée en figure 1, qui est une position extrême avant.

Dans l'exemple de réalisation représenté aux dessins, ces moyens 60 sont constitués par un anneau élastique fendu qui est engagé dans une gorge circulaire formée dans la surface cylindrique interne du piston primaire 14.

En variante, ces moyens 60 pourraient être constitués par un épaulement de la surface cylindrique interne du piston primaire 14, ou par tout autre moyen faisant saillie radialement à l'intérieur du piston primaire 14 et solidaire de celui-ci. Par exemple, ces moyens 60 pourraient être immobilisés dans le piston 14 par collage, par vissage, ou par tout autre moyen approprié.

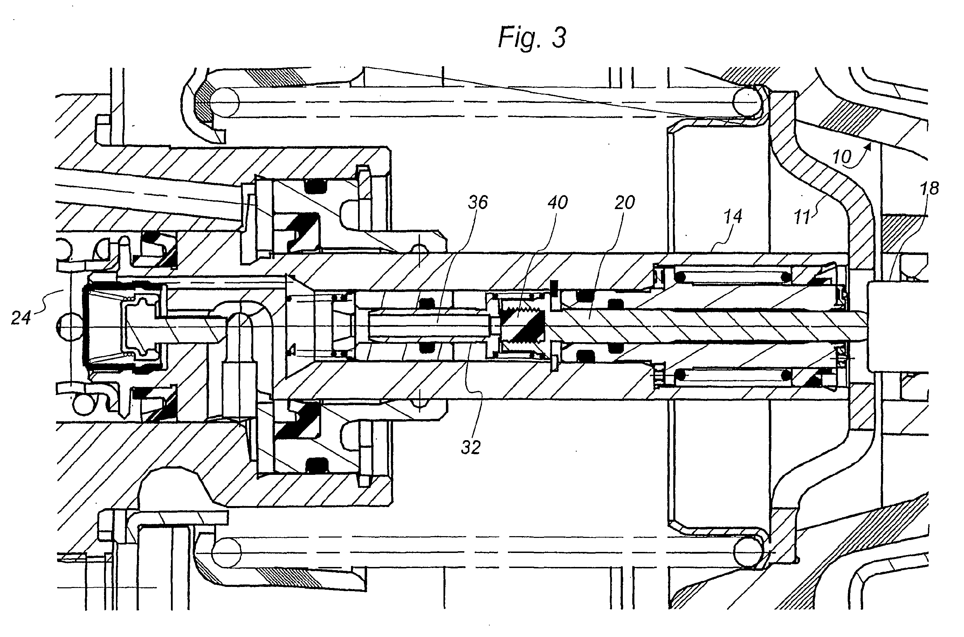

Comme ces moyens 60 limitent le déplacement vers l'arrière de la tige 20 de commande de rapport d'assistance lorsque le conducteur, après un freinage d'urgence, a relâché partiellement l'effort qu'il exerce sur la pédale de frein, l'extrémité arrière du passage 36 reste obturée par le clapet 40 tant que la pression régnant dans la chambre primaire 24 du maître-cylindre est suffisante pour que la force exercée par cette pression sur le piston rapide 32 reste supérieure à la force développée par le ressort de rappel 48 (figure 3). Quand la pression dans la chambre 24 diminue encore, le piston rapide 32 est repoussé vers l'avant par le ressort 48 et s'écarte de l'extrémité avant de la tige 20, elle-même en appui sur les moyens 60.

La force exercée par le ressort de rappel 48 sur le piston rapide 32 est inférieure à la force exercée par le ressort de rappel 52 sur le piston de réaction 22. Ainsi, l'ouverture du passage 36 a lieu lorsque le piston de réaction 22 est déjà dans sa position de repos représentée en figure 1. Dans cette position, l'extrémité arrière de la tige 20 fait saillie vers l'arrière par rapport à l'extrémité arrière du piston de réaction 22, et reste écartée axialement du palpeur 18 lorsque la tige de commande 12 est elle-même dans sa position de repos.

Toutes les pièces sont donc revenues dans la position de repos représentée en figure 1. Lors d'un freinage normal, la tige de commande 12 déplacée par la pédale de frein met la chambre arrière du servomoteur en communication avec la pression atmosphérique et le piston 10 du servomoteur déplace le piston primaire 14 vers l'avant. En cas de freinage d'urgence, la tige de commande 12 est déplacée plus vite que le piston 10 du servomoteur et vient en appui sur l'extrémité arrière de la tige 20 de commande de rapport d'assistance, pour obturer le passage 36.

De façon générale, l'invention est applicable à des dispositifs de freinage existants au prix d'une modification simple et peu coûteuse et permet d'améliorer le freinage dans les situations d'urgence.

## Revendications

1. Dispositif de freinage pour véhicule automobile, comprenant un servomoteur d'assistance pneumatique associé à un maître-cylindre (16) dont un piston primaire (14) est déplaçable en translation, pour générer un effort de freinage, par un piston (10) du servomoteur et par une tige de commande (12) reliée à une pédale de frein, ledit piston primaire (14) étant de forme générale cylindrique tubulaire et contenant un piston de réaction (22) de forme cylindrique tubulaire, muni d'un ressort de rappel (52) et destiné à coopérer à son extrémité arrière avec une extrémité avant de la tige de commande (12), une tige (20) de commande de rapport d'assistance montée coulissante dans le piston de réaction (22) et ayant une extrémité arrière destinée à coopérer avec l'extrémité avant de la tige de commande (12) reliée à la pédale de frein et une extrémité avant comportant un clapet (40) de fermeture d'un passage (36) formé dans un piston rapide (32) monté dans la partie avant du piston primaire (14), ce passage communiquant avec une chambre primaire (24) du maître-cylindre pour faire agir la pression régnant dans la chambre primaire sur l'extrémité avant du piston de réaction (22) quand ledit passage (36) n'est pas obturé par le clapet (40), **caractérisé en ce qu'**il comprend des moyens (60) limitant le déplacement de la tige de commande de rapport d'assistance vers l'arrière et permettant, après un freinage d'urgence et un relâchement partiel de l'effort de freinage, de maintenir le clapet (40) en position de fermeture du passage (36) sensiblement jusqu'à un relâchement complet de l'effort de freinage.

2. Dispositif selon la revendication 1, **caractérisé en ce que** les moyens limitant le déplacement vers l'arrière de la tige (20) de commande de rapport d'assistance sont des moyens de butée (60) portés par le piston primaire 14 et destinés à coopérer une partie de la tige précitée (20).

3. Dispositif selon la revendication 2, **caractérisé en ce que** les moyens de butée (60) sont entre l'extrémité avant du piston de réaction (22) dans sa position de repos et une partie avant de la tige (20) de commande de rapport d'assistance, cette partie avant formant logement du clapet (40) et ayant un diamètre extérieur inférieur au diamètre interne du piston primaire (14).

4. Dispositif selon la revendication 2 ou 3, **caractérisé en ce que** les moyens de butée (60) sont rapportés sur la surface interne du piston primaire et sont fixés par exemple par emboîtement, collage ou vissage.

5. Dispositif selon la revendication 4, **caractérisé en ce que** les moyens de butée (60) sont formés par un anneau élastique fendu engagé dans une gorge annulaire interne du piston primaire.

6. Dispositif selon l'une des revendications 1 à 3, **caractérisé en ce que** les moyens limitant le déplacement vers l'arrière de la tige (20) de commande de rapport d'assistance sont formés par un épaulement de la surface interne du piston primaire (14).

7. Dispositif selon l'une des revendications précédentes, **caractérisé en ce qu'**un ressort de rappel (48) est monté entre l'extrémité avant de la tige (20) de commande de rapport d'assistance et l'extrémité arrière du piston rapide (32), pour écarter le piston rapide (32) et ouvrir le passage (36) quand la force exercée sur le piston rapide (32) par la pression régnant dans la chambre primaire (24) du maître-cylindre devient inférieure à la force dudit ressort de rappel (48).

8. Dispositif selon la revendication 7, **caractérisé en ce que** la force exercée par le ressort de rappel (48) monté entre le piston rapide (32) et la tige (20) de commande de rapport d'assistance est inférieure à la force exercée sur le piston de réaction (22) par son ressort de rappel (52).

9. Dispositif selon l'une des revendications 2 à 8, **caractérisé en ce que**, dans la position de repos du dispositif, la tige (20) de commande de rapport d'assistance est en appui sur les moyens de butée (60), le piston rapide est en butée à son extrémité avant sur un siège annulaire (42) d'un ressort de rappel (44) sollicitant le piston rapide vers l'arrière, et le piston de réaction (22) est maintenu en appui à son extrémité avant sur le piston primaire (14) par son ressort de rappel (52).

10. Dispositif selon l'une des revendications précédentes, **caractérisé en ce que**, dans la position de repos du dispositif , l'extrémité arrière de la tige (20) de commande de rapport d'assistance est écartée de l'extrémité avant de la tige de commande (12) reliée à la pédale de frein.

## Claims

1. Motor vehicle braking device comprising a pneumatic brake booster associated with a master cylinder (16) of which a primary piston (14) can be moved in translation, to generate a braking force, by a piston (10) of the booster and via a control rod (12) connected to a brake pedal, the said primary piston (14) being of tubular cylindrical overall shape and containing a reaction piston (22) of tubular cylindrical shape, equipped with a return spring (52) and intended to collaborate at its rear end with a front end of the control rod (12), a booster ratio control rod (20) slidably mounted in the reaction piston (22) and having a rear end intended to collaborate with the front end of the control rod (12) connected to the brake pedal and a front end comprising a valve (40) that closes off a passage (36) formed in a rapid piston (32) mounted in the front part of the primary piston (14), this passage communicating with a primary chamber (24) of the master cylinder to cause the pressure in the primary chamber to act on the front end of the reaction piston (22) when the said passage (36) is not closed off by the valve (40), **characterized in that** it comprises means (60) limiting the backward movement of the booster ratio control rod and making it possible, after emergency braking and partial release of the braking force, to keep the valve (40) in the position in which it closes the passage (36) until the braking force has been almost completely released.

2. Device according to Claim 1, **characterized in that** the means limiting the backwards movement of the boost ratio control rod (20) are stop means (60) carried by the primary piston (14) and intended to collaborate part of the aforementioned rod (20).

3. Device according to Claim 2, **characterized in that** the stop means (60) are between the front end of the reaction piston (22) in its position of rest and a front part of the boost ratio control rod (20), this front part forming a housing for the valve (40) and having an outside diameter smaller than the inside diameter of the primary piston (14).

4. Device according to Claim 2 or 3, **characterized in that** the stop means (60) are attached to the internal surface of the primary piston and are fixed, for example, by push-fitting, bonding or screwing.

5. Device according to Claim 4, **characterized in that** the stop means (60) are formed by a split elastic ring engaged in an internal annular groove of the primary piston.

6. Device according to one of Claims 1 to 3, **characterized in that** the means limiting the backwards movement of the boost ratio control rod (20) are formed of a shoulder of the internal surface of the primary piston (14).

7. Device according to one of the preceding claims, **characterized in that** a return spring (48) is mounted between the front end of the boost ratio control rod (20) and the rear end of the rapid piston (32), to move the rapid piston (32) away and open the passage (36) when the force exerted on the rapid piston (32) by the pressure in the primary chamber (24) of the master cylinder drops below the force of the said return spring (48).

8. Device according to Claim 7, **characterized in that** the force exerted by the return spring (48) mounted between the rapid piston (32) and the boost ratio control rod (20) is lower than the force exerted on the reaction piston (22) by its return spring (52).

9. Device according to one of Claims 2 to 8, **characterized in that**, when the device is in the position of rest, the boost ratio control rod (20) rests against the stop means (60), the rapid piston is in abutment at its front end against an annular seat (42) of a return spring (44) urging the rapid piston backwards, and the reaction piston (22) is kept resting at its front end against the primary piston (14) by its return spring (52).

10. Device according to one of the preceding claims, **characterized in that**, when the device is in the position of rest, the rear end of the boost ratio control rod (20) is away from the front end of the control rod (12) connected to the brake pedal.

## Patentansprüche

1. Bremsvorrichtung für ein Kraftfahrzeug, die einen pneumatischen Unterstützungsservomotor aufweist, der einem Hauptzylinder (16) zugeordnet ist, bei dem ein Primärkolben (14) von einem Kolben (10) des Servomotors und einer mit einem Bremspedal verbundenen Steuerstange (12) translatorisch bewegt werden kann, um eine Bremskraft zu erzeugen, wobei der Primärkolben (14) eine allgemeine zylindrische Rohrform hat und einen zylindrischen, rohrförmigen Reaktionskolben (22) enthält, der mit einer Rückstellfeder (52) ausgestattet und dazu vorgesehen ist, an seinem hinteren Ende mit einem vorderen Ende der Steuerstange (12) zusammenzuwirken, und eine Stange (20) zur Steuerung des Unterstützungsverhältnisses, die im Reaktionskolben (22) gleitend angebracht ist und ein hinteres Ende, das mit dem vorderen Ende der mit dem Bremspedal verbundenen Steuerstange (12) zusammenwirken soll, sowie ein vorderes Ende hat, das ein Ventilelement (40) zum Verschließen eines Durchgangs (36) aufweist, der in einem im vorderen Bereich des Primärkolbens (14) angebrachten schnellen Kolben (32) ausgebildet ist, wobei dieser Durchgang mit einer Primärkammer (24) des Hauptzylinders verbunden ist, um den in der Primärkammer herrschenden Druck auf das vordere Ende des Reaktionskolbens (22) einwirken zu lassen, wenn das Ventilelement (40) den Durchgang (36) nicht verschließt, **dadurch gekennzeichnet, dass** sie Mittel (60) aufweist, die die Verlagerung der Stange zur Steuerung des Unterstützungsverhältnisses nach hinten begrenzen und es nach einer Schnellbremsung und einem teilweisen Nachlassen der Bremskraft ermöglichen, das Ventilelement (40) im Wesentlichen bis zum vollständigen Nachlassen der Bremskraft in der Stellung zum Verschließen des Durchgangs (36) zu halten.

2. Vorrichtung nach Anspruch 1, **dadurch gekennzeichnet, dass** die Mittel, die die Verlagerung der Stange (20) zur Steuerung des Unterstützungsverhältnisses nach hinten begrenzen, Anschlagmittel (60) sind, die vom Primärkolben (14) getragen und dazu vorgesehen sind, mit einem Teil der oben genannten Stange (20) zusammenzuwirken.

3. Vorrichtung nach Anspruch 2, **dadurch gekennzeichnet, dass** die Anschlagmittel (60) zwischen dem vorderen Ende des Reaktionskolbens (22) in seiner Ruhestellung und einem vorderen Teil der Stange (20) zur Steuerung des Unterstützungsverhältnisses liegen, wobei dieser vordere Teil eine Aufnahme für das Ventilelement (40) bildet und einen Außendurchmesser hat, der kleiner ist als der Innendurchmesser des Primärkolbens (14).

4. Vorrichtung nach Anspruch 2 oder 3, **dadurch gekennzeichnet, dass** die Anschlagmittel (60) an die Innenfläche des Primärkolbens angesetzt und beispielsweise durch Stecken, Kleben oder Schrauben befestigt sind.

5. Vorrichtung nach Anspruch 4, **dadurch gekennzeichnet, dass** die Anschlagmittel (60) durch einen geschlitzten elastischen Ring gebildet sind, der in eine ringförmige innere Nut des Primärkolbens eingesetzt ist.

6. Vorrichtung nach einem der Ansprüche 1 bis 3, **dadurch gekennzeichnet, dass** die Mittel, die die Verlagerung der Stange (20) zur Steuerung des Unterstützungsverhältnisses nach hinten begrenzen, durch einen Absatz der Innenfläche des Primärkolbens (14) gebildet sind.

7. Vorrichtung nach einem der vorhergehenden Ansprüche, **dadurch gekennzeichnet, dass** zwischen dem vorderen Ende der Stange (20) zur Steuerung des Unterstützungsverhältnisses und dem hinteren Ende des schnellen Kolbens (32) eine Rückstellfeder (48) angebracht ist, um den schnellen Kolben (32) wegzurücken und den Durchgang (36) zu öffnen, wenn die Kraft, die durch den in der Primärkammer (24) des Hauptzylinders herrschenden Druck auf den schnellen Kolben (32) ausgeübt wird, kleiner wird als die Kraft der Rückstellfeder (48).

8. Vorrichtung nach Anspruch 7, **dadurch gekennzeichnet, dass** die Kraft, die von der zwischen dem schnellen Kolben (32) und der Stange (20) zur Steuerung des Unterstützungsverhältnisses angebrachten Rückstellfeder (48) ausgeübt wird, kleiner ist als die Kraft, die auf den Reaktionskolben (22) durch dessen Rückstellfeder (52) ausgeübt wird.

9. Vorrichtung nach einem der Ansprüche 2 bis 8, **dadurch gekennzeichnet, dass** in der Ruhestellung der Vorrichtung die Stange (20) zur Steuerung des Unterstützungsverhältnisses an den Anschlagmitteln (60) anliegt, der schnelle Kolben an seinem vorderen Ende an einem ringförmigen Sitz (42) einer Rückstellfeder (44) in Anschlag ist, die den schnellen Kolben nach hinten beaufschlagt, und der Reaktionskolben (22) von seiner Rückstellfeder (52) so gehalten ist, dass sein vorderes Ende am Primärkolben (14) anliegt.

10. Vorrichtung nach einem der vorhergehenden Ansprüche, **dadurch gekennzeichnet, dass** in der Ruhestellung der Vorrichtung das hintere Ende der Stange (20) zur Steuerung des Unterstützungsverhältnisses vom vorderen Ende der mit dem Bremspedal verbundenen Steuerstange (12) weggerückt ist.
